# EUROPÄISCHE PATENTANMELDUNG

(11) **EP 3 203 029 A1**
(43) Veröffentlichungstag der Anmeldung: **09.08.2017**
(21) Anmeldenummer: 17153140.3
(22) Anmeldetag: 25.01.2017
(51) Int. Cl.: F01D 5/28, F01D 5/30

(54) **SCHAUFEL EINER STRÖMUNGSMASCHINE MIT SCHAUFELFUSSWÄRMEDAMMUNG**

(30) Priorität: 02.02.2016 DE 102016201523
(71) Anmelder: MTU Aero Engines AG, 80995 München (DE)
(72) Erfinder: Böck, Alexander, 82288 Kottgeisering (DE)

(57) **Zusammenfassung**

Die vorliegende Erfindung betrifft eine Anordnung zur Befestigung eines Schaufelfußes (2) einer Schaufel (1) einer Strömungsmaschine in einer Schaufelfußaufnahme (7) mit einer Schaufel mit einem Schaufelfuß aus einem ersten Material und einer Schaufelfußaufnahme aus einem zweiten Material, wobei zwischen dem Schaufelfuß und der Schaufelfußaufnahme eine Wärmedämmschicht (4) angeordnet ist. Außerdem betrifft die Erfindung eine Schaufel mit einem Schaufelfuß mit einer Wärmedämmschicht sowie ein Verfahren zum Betrieb einer Strömungsmaschine, bei welchem eine Schaufel mit einem Schaufelfuß (2) in einer Schaufelfußaufnahme (7) aufgenommen ist und bei dem eine Schaufelfußtemperatur eingestellt wird, die über der Schaufelfußaufnahmetemperatur ist.

## Beschreibung

### GEBIET DER ERFINDUNG

Die vorliegende Erfindung betrifft eine Anordnung zur Befestigung eines Schaufelfußes einer Schaufel einer Strömungsmaschine in einer Schaufelfußaufnahme sowie eine Schaufel für eine Strömungsmaschine und ein Verfahren zum Betrieb einer Strömungsmaschine.

### STAND DER TECHNIK

Bei Strömungsmaschinen, wie stationären Gasturbinen oder Flugtriebwerken, ist eine Vielzahl von Schaufeln vorgesehen, die als Laufschaufeln an einem sich drehenden Rotor befestigt sind oder als Leitschaufeln ortsfest in der Strömungsmaschine angeordnet sind. Im Bereich der Schaufelblätter der Leitschaufeln und der Laufschaufeln wird das Fluid der Strömungsmaschine, wie beispielsweise Luft, durch die Strömungsmaschine geleitet, sodass nach einer Verdichtung des Fluids im Verdichter bzw. Kompressor und Zündung eines geeigneten Brennstoff - Fluid - Gemischs in der Brennkammer das ausströmende Verbrennungsgas einen Rotor antreiben kann, der wiederum den Verdichter antreiben kann. Entsprechend müssen sowohl Laufschaufeln als auch Leitschaufeln im Strömungskanal der Strömungsmaschine hohen Anforderungen gerecht werden, da sie hohen Temperaturen, hohen mechanischen Belastungen sowie aggressiven Medien ausgesetzt sein können. Folglich ist es häufig vorteilhaft und/oder notwendig die Schaufeln aus einem bestimmten Material zu fertigen, welches die speziellen Anforderungen erfüllt. Insbesondere kann das Material der Schaufeln unterschiedlich zu dem Material der zu den Schaufeln benachbarten Komponenten der Strömungsanlage sein, wie beispielsweise das Material der Scheiben eines Rotors oder sonstiger Schaufelaufnahmen, in denen die Schaufeln aufgenommen sind. Die Verwendung unterschiedlicher Materialien für die Schaufeln und benachbarte Komponenten, wie Rotorscheiben, Gehäuse usw. ergibt sich aufgrund der speziellen und aufwändigen Anforderungen für die Schaufeln und die damit verbundenen hohen Kosten für das entsprechende Material für die Schaufeln und/oder aufgrund eines unterschiedlichen Anforderungsprofils der zu den Schaufeln benachbarten Komponenten der Strömungsmaschine, sodass das gleiche Material wie für die Schaufeln für derartige Komponenten nicht eingesetzt werden kann oder soll.

Damit sind jedoch Verbindungen der Schaufel zu benachbarten Komponenten aus unterschiedlichen Materialien notwendig, die entsprechende Probleme mit sich bringen können.

An den Verbindungsstellen zwischen den einzelnen Komponenten, wie den Schaufeln und insbesondere den Laufschaufeln einerseits und Rotorscheiben, in denen sie aufgenommen sind, andererseits, kann es durch Relativbewegung beispielsweise zu Verschleiß kommen, aber auch andere Probleme durch Korrosion, insbesondere Fretting, oder durch mechanische Belastungen durch Spannungsspitzen aufgrund von Linien - oder Punktkontakten zwischen Schaufel und Scheibe können auftreten.

Um diese Probleme zu lösen, wird beispielsweise in der EP 2 719 865 A1 eine Einlage für eine Schaufel - Scheiben - Verbindung einer Strömungsmaschine beschrieben, wobei die Einlage aus einem Fasermaterial und/oder Schaummaterial gebildet ist, in dem ein Schmierstoff eingelagert sein kann, um den Verschleiß bei einer Relativbewegung der Schaufel bezüglich der Schaufelaufnahme zu verringern. In der WO 96/41068 A1 wird ebenfalls eine Einlage zwischen Schaufel und Schaufelaufnahme vorgeschlagen, die durch Klebstoff an einer der Kontaktflächen angeordnet wird.

Die US 8 545 183 B2 schlägt eine Abdichtung eines Spalts zwischen einem Schaufelfuß und einer Schaufelfußaufnahme durch eine entsprechende Beschichtung vor. Die US 2007/0048142 A1 wiederum offenbart zur Verbesserung der Beständigkeit gegenüber Kontaktdrücken bei einer Schaufel - Scheiben - Verbindung das Vorsehen einer nicht - metallischen Schicht mit Polyamid, während die EP 2 423 442 A2 einen Reibstreifen vorschlägt, wobei zusätzlich ein elektrisch isolierendes Material vorgesehen wird, um Schäden aufgrund vom elektromotorischen Kräften zu vermeiden. Die WO 2013/169271 A1 schlägt für den Schaufelfuß einer Schaufel eines Fans das Vorsehen eines Kunststoffgewebes vor, um Verschleiß des Schaufelfußes in einer Schaufelfußaufnahme zu vermeiden.

### OFFENBARUNG DER ERFINDUNG

### AUFGABE DER ERFINGUNG

Obwohl mit den verschiedenen Schaufelfuß - Schaufelfußaufnahme - Verbindungen aus dem Stand der Technik bereits die Möglichkeit geschaffen wurde, für die Schaufel und die Schaufelfußaufnahme unterschiedliche Werkstoffe einzusetzen und diese Komponenten wirkungsvoll zu verbinden, besteht weiterhin ein Bedarf dafür, für die verschiedenen Komponenten Schaufel und Schaufelaufnahme speziell angepasste Werkstoffe einzusetzen, wobei jedoch der Verbindungsbereich der Komponenten so ausgebildet sein soll, dass bei einer maximalen Ausnutzung des Potentials der Werkstoffe eine hohe Lebensdauer der Verbindung der Komponenten und ein optimaler Einsatz der einzelnen Komponenten gegeben ist. Gleichzeitig soll eine entsprechende Lösung einfach und zuverlässig herstellbar und einsetzbar sein.

### TECHNISCHE LÖSUNG

Diese Aufgabe wird gelöst durch eine Anordnung mit den Merkmalen des Anspruchs 1 sowie eine Schaufel mit den Merkmalen des Anspruchs 8 und ein Verfahren mit den Merkmalen des Anspruchs 14. Vorteilhafte Ausgestaltungen sind Gegenstand der abhängigen Ansprüche.

Bei der vorliegenden Erfindung wird darauf abgestellt, dass Schaufeln und Schaufelaufnahmen in einer Strömungsmaschine bevorzugt bei unterschiedlichen Betriebstemperaturen betrieben werden sollen, um für die unterschiedlichen angestrebten Betriebstemperaturen entsprechend gezielt, optimierte Werkstoffe einsetzen zu können. Entsprechend wird vorgeschlagen, im Bereich der Schaufel - Schaufelaufnahme - Verbindung, beispielsweise zwischen einem Schaufelfuß einer Laufschaufel und einer Schaufelfußaufnahme in einer Rotorscheibe, einen Temperaturgradienten einzustellen, sodass der Schaufelfuß bei einer höheren Betriebstemperatur betrieben werden kann als das Material, das die Schaufelfußaufnahme bildet. Dadurch kann auf eine Kühlung des Schaufelfußbereichs verzichtet werden oder diese zumindest verringert werden und der Schaufelfuß kann aus einem Material gefertigt werden, welches für höhere Einsatztemperaturen optimiert ist. Dadurch stellt sich auch nicht mehr das Problem, dass an der Verbindungsstelle der Schaufel zur Schaufelaufnahme der Schaufelfuß aufgrund der an die Schaufelfußaufnahme angepassten Temperatur eigentlich bei zu niedrigen Temperaturen betrieben werden muss, da der Werkstoff der Schaufel auf höhere Temperaturen im Strömungskanal ausgerichtet ist, sodass der Werkstoff in dem Temperaturbereich an der Schaufelfußaufnahme bereits spröde Eigenschaften zeigt, während die Temperatur für den Werkstoff der Schaufelaufnahme eigentlich zu hoch ist und dieser durch Überhitzung beschädigt werden kann, wenn die Temperatur im Bereich der Schaufel - Schaufelaufnahme - Verbindung aufgrund der hohen Schaufeltemperaturen in der Schaufelfußaufnahme erhöht ist.

Entsprechend kann die Schaufelfußtemperatur beim Betrieb der Strömungsmaschine gemäß der Erfindung so eingestellt werden, dass ein Grenzwert der Duktilität des Materials, aus dem der Schaufelfuß gebildet ist, überschritten wird, also der Schaufelfuß eine Mindestduktilität aufweist, sodass kein sprödes Werkstoffverhalten des Werkstoffs des Schaufelfußes beim Betrieb der Strömungsmaschine auftritt. Gleichzeitig oder alternativ kann die Schaufelfußaufnahmetemperatur, also die Temperatur, die der Werkstoff des Schaufelfußaufnahme beim Betrieb der Strömungsmaschine erfährt, so gewählt werden, dass ein Grenzwert der Festigkeit des Materials überschritten wird, das heißt dass eine ausreichende Festigkeit auch bei Betriebstemperatur der Strömungsmaschine erhalten bleibt und/oder dass ein Grenzwert der Kriechrate und/oder der Oxidation- oder Korrosionsrate des Materials unterschritten wird, das heißt, dass die Oxidation bzw. Korrosion oder das Kriechen unter kritischen Werten gehalten werden können. Unter Betriebstemperatur der Strömungsmaschine wird die Temperatur der entsprechenden Bauteile oder Komponenten verstanden, die maximal im normalen Dauerbetrieb oder bei maximaler Leistung der Strömungsmaschine erreicht werden.

Um einen derartigen Betrieb einer Strömungsmaschine zu ermöglichen, wird vorgeschlagen, dass zwischen dem Schaufelfuß und der Schaufelfußaufnahme bei einer Anordnung einer Schaufel in einer Schaufelfußaufnahme eine Wärmedämmschicht vorgesehen wird, die die Einstellung eines entsprechenden Temperaturgradienten zwischen dem Schaufelfuß und der Schaufelfußaufnahme ermöglicht. Die Wärmedämmschicht kann entsprechend aus einem Material gebildet sein, welches eine geringe Wärmeleitfähigkeit aufweist und insbesondere eine geringere Wärmeleitfähigkeit aufweist als das Material des Schaufelfußes und das Material der Schaufelfußaufnahme.

Die Wärmedämmschicht kann vorzugsweise aus einem keramischen Material, wie Aluminiumoxid und/oder Zirkonoxid gebildet sein oder ein derartiges keramisches Material umfassen.

Vorzugsweise kann die Wärmedämmschicht so gewählt werden, dass die Wärmeleitfähigkeit der Wärmedämmschicht kleiner oder gleich 50 W/mK und insbesondere kleiner oder gleich 50 W/mK, vorzugsweise kleiner oder gleich 1 W/mK beträgt.

Die Wärmedämmschicht kann bei einer Anordnung eines Schaufelfußes einer Schaufel in einer Schaufelfußaufnahme der Strömungsmaschine entweder auf dem Schaufelfuß oder an der Begrenzungswand der Schaufelfußaufnahme als Beschichtung aufgebracht sein oder als separate Einlage zwischen den entsprechenden Bauteilen angeordnet sein. Die Wärmedämmschicht kann hierbei zumindest im Bereich starker Wärmeübertragung zwischen Schaufelfuß und Schaufelfußaufnahme, vorzugsweise im gesamten Kontaktbereich zwischen Schaufelfuß und Schaufelfußaufnahme vorgesehen sein. Bei der Schaufel und der Schaufelfußaufnahme kann es sich um beliebige, geeignete Komponenten einer Strömungsmaschine handeln, insbesondere um Laufschaufeln, die in einem Rotor insbesondere einer Rotorscheibe angeordnet sind.

Um die mechanischen Belastungen der Wärmedämmschicht klein zu halten, kann auf der Wärmedämmschicht eine duktile Schicht abgeschieden sein, deren Duktilität insbesondere größer ist als die Duktilität der Wärmedämmschicht. Durch eine derartige duktile Schicht können mechanische Spannungsspitzen durch entsprechende Verformung der duktilen Schicht vermieden bzw. abgebaut werden.

Die duktile Schicht kann entsprechend aus einem metallischen Material gebildet sein. Die duktile Schicht kann insbesondere eine Bruchdehnung von mehr als 5%, vorzugsweise mehr als 10% aufweisen.

Entsprechend wird nach einen weiteren Aspekt der vorliegenden Erfindung, für den selbstständig und unabhängig von anderen Aspekten der vorliegenden Erfindung eine Schaufel für eine Strömungsmaschine beansprucht, bei der der Schaufelfuß eine entsprechende Wärmedämmschicht aufweist, wie sie bereits oben bezüglich der Anordnung einer Schaufel in einer Schaufelaufnahme beschrieben worden ist.

Entsprechend ist es möglich den Schaufelfuß einer Laufschaufel und eine Schaufelfußaufnahme in einer Rotorscheibe bei unterschiedlichen Temperaturen zu betreiben, sodass auch der Einsatz unterschiedlicher Werkstoffe für Schaufeln bzw. Schaufelfußbereiche und die Schaufelaufnahme enthaltenden Bauteile, wie Rotorscheiben, erleichtert wird. Dies ist insbesondere bei den neuen Generationen von Strömungsmaschinen bzw. Flugtriebwerken vorteilhaft, die mit einem Getriebefan ausgestattet sind. In derartigen Strömungsmaschinen sind die Anforderungen insbesondere an Laufschaufeln besonders hoch, da zur Steigerung des Wirkungsgrades beispielsweise die Niederdruckturbine bei höheren Umdrehungszahlen und mit höheren Gaseintrittstemperaturen betrieben wird als bei Flugtriebwerken früherer Generationen.

Mit der vorliegenden Erfindung ist es beispielsweise möglich Schaufel oder Schaufelfußbereiche aus TiAl - Legierungen oder Molybdän - Basislegierungen einzusetzen, während die zugehörige Rotorscheibe aus einer Ni - Basislegierung, insbesondere Nickelbasis - Superlegierung, wie z.B. INCONEL alloy 718 (Handelsname der Special Metals Corp.) gebildet sein kann.

Mit Basislegierungen bzw. Legierungsbezeichnungen mit Legierungsangaben mit Nennung von chemischen Elementen an den ersten Stellen werden Legierungen bezeichnet, die die genannten chemischen Elemente als Komponenten mit den größten Anteil aufweisen. Superlegierungen bezeichnen Legierungen, die bei hohen Temperaturen von über der Hälfte der Schmelztemperatur noch ausreichende strukturelle Festigkeiten aufweisen.

### KURZBESCHREIBUNG DER FIGUREN

Die beigefügten Zeichnungen zeigen in rein schematischer Weise in
- Fig. 1: eine perspektivische Darstellung einer Schaufel einer Strömungsmaschine und in
- Fig. 2: eine Schnittansicht durch einen Fußbereich einer weiteren Schaufel einer Strömungsmaschine.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

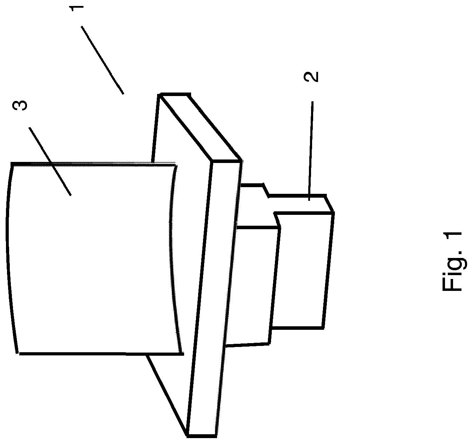

Die Fig. 1 zeigt ein schematisches Beispiel einer Schaufel 1 einer Strömungsmaschine, wie beispielsweise einer Gasturbine oder eines Flugtriebwerks. Die in Fig. 1 gezeigte Schaufel 1 kann beispielsweise als Laufschaufel an einem Rotor einer Strömungsmaschine angeordnet sein, wobei der Fuß 2 der Schaufel 1 in einer entsprechenden Schaufelfußaufnahme (nicht gezeigt) einer Rotorscheibe oder dergleichen aufgenommen wird. Bei der in Fig. 1 gezeigten Schaufel 1 ist der Bereich des Schaufelfußes 2, der in einer Schaufelfußaufnahme aufgenommen wird, durch ein inneres Deckband vom Schaufelblatt 3 getrennt. Allerdings ist die Erfindung auch auf andere Arten von Schaufeln mit anderen Schaufelformen, mit oder ohne inneren und äußeren Deckbändern sowie andere Schaufelfußformen anwendbar.

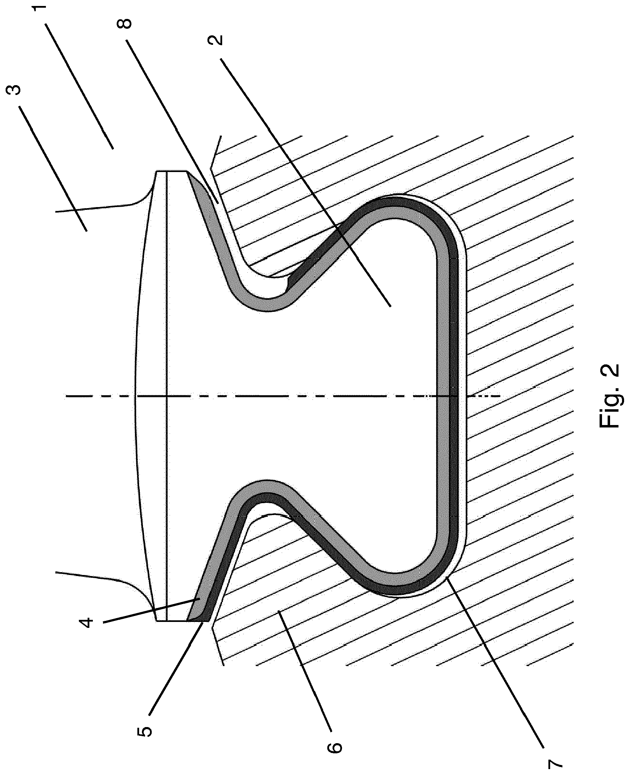

In Fig. 2 ist ein Schnitt durch eine vergleichbare Schaufel mit einem unterschiedlich geformten Schaufelfuß 2 gezeigt, wobei in der Schnittansicht zusätzlich die Schaufelfußaufnahme 7 einer Rotorscheibe 6 dargestellt ist.

Aus der Schnittdarstellung der Fig. 2 ergibt sich der erfindungsgemäße Aufbau des Schaufelfußes mit einer Wärmedämmschicht 4, die zumindest über den gesamten Oberflächenbereich des Schaufelfußes 2, welcher in Kontakt mit dem Innenwandbereich der Schaufelfußaufnahme 7 gelangen kann, vorgesehen ist.

Zusätzlich zur Wärmedämmschicht 4 ist bei dem Ausführungsbeispiel der Fig. 2 eine duktile Schicht 5 auf der Wärmedämmschicht 4 aufgebracht. Die duktile Schicht 5 kann, wie im rechten Teil des Schaufelfußes 2 der Fig. 2 gezeigt ist, lediglich über Teilbereiche der Wärmedämmschicht 4 aufgebracht sein, sodass in den übrigen Bereichen, in denen keine duktile Schicht 5 vorgesehen ist, ein Spalt 8 zwischen der Begrenzungswand der Schaufelfußaufnahme 7 und der Wärmedämmschicht 4 des Schaufelfußes 2 ausgebildet sein kann. Alternativ kann die duktile Schicht 5 aber auch, wie im linken Teil des Schaufelfußes 2 der Fig. 2 gezeigt ist, im Wesentlichen über den gesamten Bereich der Wärmedämmschicht 4 aufgebracht sein. Der linke und der rechte Teil der Fig. 2 zeigen somit zwei unterschiedliche Ausführungsformen im Hinblick auf die duktile Schicht 5.

Erfindungsgemäß wird die Wärmedämmschicht 4, die bei dem gezeigten Ausführungsbeispiel am Schaufelfuß 2 angeordnet ist, aber bei anderen Ausführungsbeispielen auch an der Begrenzungswand der Schaufelfußaufnahme 7 angeordnet sein könnte, dazu verwendet, einen Temperaturgradienten vom Schaufelfuß 2 zur Begrenzungswand der Schaufelfußaufnahme 7 bzw. dem Scheiben - bzw. Rotorwerkstoff, in dem die Schaufelfußaufnahme 7 ausgebildet ist, einzustellen. Durch die Wärmedämmschicht 4 ist es möglich im Schaufelfuß 2 beim Betrieb der Strömungsmaschine eine höhere Temperatur einzustellen, als in der Rotorscheibe 6 bzw. dem Rotor. Dadurch ist es möglich für den Schaufelfuß 2 einen für höhere Betriebstemperaturen optimierten Werkstoff vorzusehen, während für die Rotorscheibe 6 ein für eine niedrigere Betriebstemperatur optimierter Werkstoff eingesetzt werden kann. Entsprechend kann auch die Kühlung des Schaufelfußes reduziert werden, ohne befürchten zu müssen, dass das Material der Rotorscheibe 6 überhitzt wird.

Beispielswiese könnte die Rotorscheibe 6 aus einem Nickelbasiswerkstoff gebildet sein, während die Schaufel bzw. der Schaufelfuß 2 aus einer Nickelbasissuperlegierung mit einer höheren Einsatztemperatur oder aus einem anderen Material mit höherer Einsatztemperatur gebildet sein könnte, sodass sich über der Wärmedämmschicht 4 ein Temperaturunterschied zwischen der Betriebstemperatur des Schaufelfußes 2 und der Betriebstemperatur der Rotorscheibe 6 in der Größenordnung von 50°C bis 100°C oder darüber eingestellt werden kann, um das Potential der verschiedenen Werkstoffe von Rotorscheibe 6 und Schaufel 1 entsprechend ausreizen zu können.

Als Wärmedämmschicht kommen entsprechende Materialien mit geringer Wärmeleitfähigkeit in Betracht, wie beispielsweise keramische Wärmedämmschichten bzw. Wärmedämmschichten, die keramische Anteile enthalten. Beispielhaft könnten Materialien aus oder mit Aluminiumoxid und/oder Zirkonoxid zum Einsatz kommen.

Die duktile Schicht 5, die aus einem geeigneten duktilen Werkstoff, wie beispielswiese einem metallischen Material mit ausreichend hoher Bruchdehnung gebildet werden kann, dient im Wesentlichen dem Schutz der Wärmedämmschicht durch Vermeidung von Spannungsspitzen, die sich insbesondere bei punkt - oder linienförmigem Kontakt des Schaufelfußes 2 bzw. der darauf angeordneten Wärmedämmschicht 4 mit der Schaufelfußaufnahme 7 ergeben könnten. Durch eine duktile Schicht 5 können mögliche Fertigungsungenauigkeiten, die zu derartigen Spannungsspitzen führen könnten, in einfacher Weise ausgeglichen werden und die Wärmedämmschicht kann vor mechanischen Überlastungen geschützt werden. Darüber hinaus kann die duktile Schicht 5 weiterhin zusätzliche Funktionen, wie beispielsweise hinsichtlich der Vermeidung von Reibverschleiß oder dergleichen übernehmen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzumfang der beigefügten Ansprüche nicht verlassen wird. Die Offenbarung der vorliegenden Erfindung schließt sämtliche Kombinationen der vorgestellten Einzelmerkmale mit ein.

### BEZUGSZEICHENLISTE

- 1: Schaufel
- 2: Schaufelfuß
- 3: Schaufelblatt
- 4: Wärmedämmschicht
- 5: duktile Schicht
- 6: Rotorscheibe
- 7: Schaufelfußaufnahme
- 8: Spalt

## Patentansprüche

1. Anordnung zur Befestigung eines Schaufelfußes (2) einer Schaufel (1) einer Strömungsmaschine in einer Schaufelfußaufnahme (7) mit einer Schaufel mit einem Schaufelfuß aus einem ersten Material und einer Schaufelfußaufnahme aus einem zweiten Material,
**dadurch gekennzeichnet, dass**
zwischen dem Schaufelfuß und der Schaufelfußaufnahme eine Wärmedämmschicht (4) angeordnet ist.

2. Anordnung nach Anspruch 1,
**dadurch gekennzeichnet, dass**
die Wärmedämmschicht (4) eine geringere Wärmeleitfähigkeit aufweist als das erste Material des Schaufelfußes (2) und das zweite Material der Schaufelfußaufnahme (7).

3. Anordnung nach einem der vorhergehenden Ansprüche,
**dadurch gekennzeichnet, dass**
die Wärmedämmschicht (4) aus einem keramischen Material gebildet ist oder keramisches Material umfasst.

4. Anordnung nach einem der vorhergehenden Ansprüche,
**dadurch gekennzeichnet, dass**
die Wärmeleitfähigkeit der Wärmedämmschicht (4) kleiner oder gleich 50 W/mK, insbesondere kleiner oder gleich 25 W/mK, vorzugsweise kleiner oder gleich 1 W/mK beträgt.

5. Anordnung nach einem der vorhergehenden Ansprüche,
**dadurch gekennzeichnet, dass**
die Wärmedämmschicht (4) auf den Schaufelfuß (2) und/oder die Begrenzungswand der Schaufelfußaufnahme (7) beschichtet ist.

6. Anordnung nach Anspruch 5,
**dadurch gekennzeichnet, dass**
auf der Wärmedämmschicht (4) eine duktile Schicht (5) abgeschieden ist, deren Duktilität größer ist als die Duktilität der Wärmedämmschicht.

7. Anordnung nach Anspruch 6,
**dadurch gekennzeichnet, dass**
die duktile Schicht (5) aus einem metallischen Material gebildet ist und/oder das Material der duktilen Schicht eine Bruchdehnung von mehr als 5%, vorzugsweise mehr als 10% aufweist.

8. Schaufel für eine Strömungsmaschine mit einem Schaufelfuß (2) zur Aufnahme in einer Schaufelfußaufnahme (7),
**dadurch gekennzeichnet, dass**
der Schaufelfuß eine Wärmedämmschicht (4) aufweist.

9. Schaufel nach Anspruch 8,
**dadurch gekennzeichnet, dass**
die Wärmedämmschicht (4) eine geringere Wärmeleitfähigkeit aufweist als das Material des Schaufelfußes.

10. Schaufel nach einem der Ansprüche 8 oder 9,
**dadurch gekennzeichnet, dass**
die Wärmedämmschicht (4) aus einem keramischen Material gebildet ist oder keramisches Material umfasst.

11. Schaufel nach einem der Ansprüche 8 bis 10,
**dadurch gekennzeichnet, dass**
die Wärmeleitfähigkeit der Wärmedämmschicht (4) kleiner oder gleich 50 W/mK, insbesondere kleiner oder gleich 25 W/mK, vorzugsweise kleiner oder gleich 1 W/mK beträgt.

12. Schaufel nach einem der Ansprüche 8 bis 11,
**dadurch gekennzeichnet, dass**
auf der Wärmedämmschicht (4) eine duktile Schicht (5) abgeschieden ist, deren Duktilität größer ist als die Duktilität der Wärmedämmschicht.

13. Schaufel nach Anspruch 12,
**dadurch gekennzeichnet, dass**
die duktile Schicht (5) aus einem metallischen Material gebildet ist und/oder das Material der duktilen Schicht eine Bruchdehnung von mehr als 5%, vorzugsweise mehr als 10% aufweist.

14. Verfahren zum Betrieb einer Strömungsmaschine, insbesondere einer Strömungsmaschine mit mindestens einer Anordnung nach einem der Ansprüche 1 bis 7 und/oder mindestens einer Schaufel nach einem der Ansprüche 8 bis 13, bei welchem eine Schaufel mit einem Schaufelfuß in einer Schaufelfußaufnahme aufgenommen ist und bei dem eine Schaufelfußtemperatur eingestellt wird, die über der Schaufelfußaufnahmetemperatur ist.

15. Verfahren nach Anspruch 14 oder 15,
**dadurch gekennzeichnet, dass**
zwischen dem Schaufelfuß (2) und der Schaufelfußaufnahme (7) eine Wärmedämmschicht (4) angeordnet ist und ein Temperaturunterschied beim Betrieb der Strömungsmaschine zwischen der Seite der Wärmedämmschicht am Schaufelfuß und der Seite der Wärmedämmschicht an der Schaufelfußaufnahme größer oder gleich 25°C, insbesondere größer oder gleich 50°C, vorzugsweise größer oder gleich 100°C beträgt.

16. Verfahren nach Anspruch 14 oder 15,
**dadurch gekennzeichnet, dass**
die Schaufelfußtemperatur beim Betrieb der Strömungsmaschine so gewählt ist, dass ein Grenzwert der Duktilität des Materials, aus dem der Schaufelfuß (2) gebildet ist, überschritten wird und/oder dass die Schaufelfußaufnahmetemperatur so gewählt ist, dass ein Grenzwert der Festigkeit des Materials der Schaufelfußaufnahme (7) überschritten und/oder ein Grenzwert der Kriechrate und/oder der Oxidations - oder Korrosionsrate des Materials der Schaufelfußaufnahme unterschritten wird.
